# EUROPEAN PATENT SPECIFICATION

(11) **EP 2 587 251 B1**
(45) Date of publication and mention of the grant of the patent: **23.10.2019**
(21) Application number: 11798025.0
(22) Date of filing: 15.06.2011
(51) Int. Cl.: G01N 21/51, G01N 35/02, G01N 15/02, G06F 17/00

(54) **AUTOMATED ANALYSIS DEVICE AND AUTOMATED ANALYSIS METHOD**
VORRICHTUNG FÜR AUTOMATISIERTE ANALYSEN UND VERFAHREN FÜR AUTOMATISIERTE ANALYSEN
DISPOSITIF D'ANALYSE AUTOMATISÉ ET PROCÉDÉ D'ANALYSE AUTOMATISÉ

(30) Priority: 23.06.2010 JP 2010142259
(43) Date of publication of application: 01.05.2013
(73) Proprietor: Hitachi High-Technologies Corporation, Tokyo 105-8717 (JP)
(72) Inventor: TAMURA Takuo, Chiyoda-ku, Tokyo 100-8220 (JP); SHIBA Masaki, Chiyoda-ku, Tokyo 100-8220 (JP); ADACHI Sakuichiro, Kokubunji-shi Tokyo 185-8601 (JP)
(74) Representative: Mewburn Ellis LLP
(86) International application number: PCT/JP2011/063663
(87) International publication number: WO 2011/162139

(56) References cited:
- EP-A1- 1 939 607
- JP-A- 63 103 940
- JP-A- H04 503 106
- JP-A- H11 503 236
- JP-A- S61 173 138
- JP-A- 2000 230 901
- JP-A- 2001 249 134
- JP-A- 2002 250 692
- US-A1- 2007 195 324

## Description

### Technical Field

The present invention relates to an automatic analyzer which irradiates an object to be measured with light, and measures light scattered from the object to be measured.

### Background Art

Automatic analyzers are widely used as analysis devices which analyze the amount of ingredients contained in a sample. Such automatic analyzers work as follows. A sample, or a reaction solution in which a sample is mixed with a reagent, is irradiated with light from a light source; the quantity of transmitted light, which is obtained by the irradiation, and has a single wavelength or a plurality of wavelengths, is measured to calculate absorbance; and the amount of ingredients is estimated from the relationship between the absorbance and the concentration according to the Lambert-Beer law.

These automatic analyzers are configured such that a large number of cells each holding a reaction solution are circumferentially arranged on a cell disk which repeatedly rotates and stops, and a transmitted light measuring section disposed beforehand measures changes in absorbance with time at regular time intervals while the cell disk rotates.

The automatic analyzer is provided with a system for measuring the quantity of transmitted light. Meanwhile, if the reaction of a reaction solution is roughly classified, two kinds of reaction are used: color reaction between a substrate and an enzyme; and agglutination reaction between an antigen and an antibody. The former is biochemical analysis, and has LDH (lactate dehydrogenase), ALP (alkaline phosphatase), AST (asparagic acid oxoglutaric acid aminotransferase) and the like as inspection items.

The latter is immunity analysis, and has CRP (C-reactive protein), IgG (immunoglobulin), RF (Rheumatoid factor) and the like as inspection items. The blood concentration of the measured substance which is measured in the latter immunity analysis is low, and therefore requires high sensitivity. Hitherto, the latex agglutination immunoassay is used to increase the sensitivity. In the latex agglutination immunoassay, when ingredients contained in a sample are identified and agglomerated by use of a reagent in which an antibody is sensitized (bonded) on the surface of latex particles, light is projected on a reaction solution, and the light quantity of light transmitted without being scattered by latex agglutination is measured, thereby determining the amount of ingredients contained in the sample.

Moreover, the sensitivities of devices are also improved not by measuring the quantity of transmitted light, but by measuring the quantity of scattered light. For example, the following are disclosed: a system in which a diaphragm is used to separate scattered light into transmitted light and scattered light, and absorbance and scattered light are concurrently measured (refer to Patent Document 1); a configuration in which the reflected and scattered light from large aggregate which is formed as a result of the progress of agglutination reaction is measured, and the accuracy of the measurement on the high-concentration side is increased (refer to Patent Document 2); and a method in which an integrating sphere is used before and behind a reaction container to measure the average light quantity of forward-scattered light and that of back-scattered light, and the change in turbidity due to deviation in cell position is then corrected (refer to Patent Document 3).

### Prior Art Literature

### Patent Documents

Patent Document 1: JP-2001-141654-A
Patent Document 2: JP-2008-8794-A
Patent Document 3: JP-1998-332582-A

### Summary of the Invention

### Problems to be Solved by the Invention]

Incidentally, when automatic analyzers use scattered light, as with light scattering caused by an object to be measured, air bubbles and foreign matters which exist in a measurement optical path, scars of a reaction container, and the like also appear as components of scattered light, and thus exert influences on the measurement values as noise components.

In addition, when a reaction is conducted using latex particles, the involvement of particles in a solution causes scattered light to fluctuate (for example, Brownian movement specific to the particles, or the convection of the solution), and the fluctuations may similarly exert influences on the measurement values as noise components.

For the purpose of reducing the influences of noises, there is a method in which the output from a detector is integrated for the fixed period of time to improve S/N ratio properties. However, the integration time is restricted due to the temporal change of an object to be measured. Moreover, when foreign matters such as air bubbles accidentally adhere to the inside of the reaction container, effects of improving the S/N ratio properties cannot be expected.

When scattered light caused by air bubbles, foreign matters, scars of a reaction container, or particle fluctuations, and scattered light resulting from the reaction of the object to be measured are to be separated, it is difficult to predict the occurrence of the scattered light caused by air bubbles or the like beforehand, and to carry out the separation of the scattered light after the occurrence, because the scattered light caused by air bubbles or the like occurs accidentally or at random.

Object of the present invention is to provide an automatic analyzer which uses scattered light, wherein the influence of scattered light having noise components other than an object to be measured can be reduced, and the S/N ratio properties of a light reception signal can be improved, and to provide a method for the automatic analyzer. Means for Solving the Problems

In order to achieve the above-described object, the present invention is configured as below.

According to a first aspect of the present invention there is provided an automatic analyzer according to claim 1.

According to a second aspect of the present invention there is provided an automatic analysis method according to claim 10.

The present invention can provide an automatic analyzer which uses scattered light, wherein the influence of scattered light having noise components other than an object to be measured can be reduced, and the S/N ratio properties of a light reception signal can be improved, and can provide a method for the automatic analyzer.

### Brief Description of the Drawings

Fig. 1 is a diagram illustrating an overall configuration of an automatic analyzer to which one embodiment of the present invention is applied;
Fig. 2 is a diagram illustrating a detection system according to one embodiment of the present invention;
Fig. 3 is a diagram illustrating a modified example of the detection system according to one embodiment of the present invention;
Fig. 4A is a graph illustrating measurement results of the detection system according to one embodiment of the present invention;
Fig. 4B is a graph illustrating measurement results of the detection system according to one embodiment of the present invention;
Fig. 5 is a correlation graph of data obtained at a plurality of angles according to one embodiment of the present invention;
Fig. 6 is a flowchart illustrating data processing according to one embodiment of the present invention;
Fig. 7 is a graph illustrating the results of calculation according to one embodiment of the present invention;
Fig. 8 is a functional block diagram illustrating an arithmetic processing unit according to one embodiment of the present invention; and
Fig. 9 is a diagram illustrating one example of a display screen (parameter selection means) according to one embodiment of the present invention.

### Modes for Carrying Out the Invention

Embodiments of the present invention will be described below with reference to the accompanying drawings. Embodiments

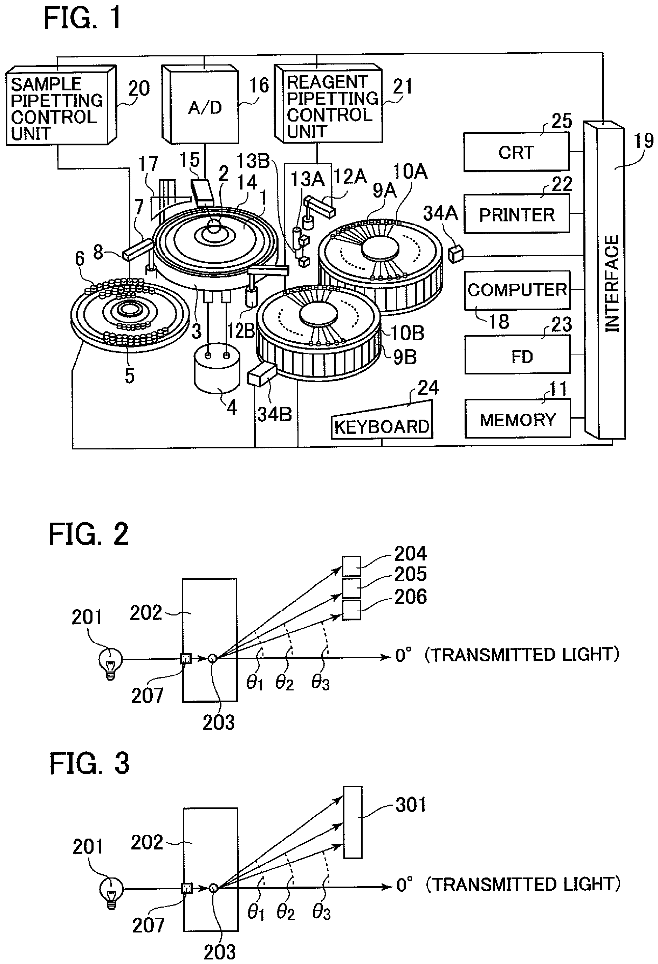

First of all, the overall configuration of an automatic analyzer to which one embodiment of the present invention is applied will be described with reference to Fig. 1. Fig. 1 is a diagram schematically illustrating the overall configuration of the automatic analyzer according to one embodiment of the present invention.

In Fig. 1, a large number of reaction containers 2, each of which is made of a translucent material, are circumferentially arranged on an intermittently rotatable reaction disk 1. The reaction containers 2 on the reaction disk 1 are kept at the predetermined temperature (for example, 37°C) by a thermostatic bath 3. A fluid is accommodated in the thermostatic bath 3, and the temperature of the fluid is adjusted by a constant-temperature keeping device 4.

A large number of sample containers 6, each of which accommodates a biological sample such as blood or urine, are arranged on a sample disk 5. A pipette nozzle 8 which is mounted to a movable arm 7 sucks a predetermined amount of sample from the sample container 6 located at a suction position of the sample disk 5, and then discharges the sucked sample into the reaction container 2 located at a discharge position on the reaction disk 1.

A plurality of reagent bottles 10A, 10B, to which labels each showing reagent identification information such as a bar code are stuck respectively, are arranged on reagent disks disposed in reagent cooling storages 9A, 9B respectively. These reagent bottles 10A, 10B accommodate reagent solutions which correspond to analysis items to be analyzed by the automatic analyzer.

Bar code readers 34A, 34B are positioned near the reagent cooling storages 9A, 9B, respectively. At the time of reagent registration, the bar code readers 34A, 34B read bar codes which are displayed on outer walls of the reagent bottles 10A, 10B respectively. The pieces of reagent information read by the bar code readers 34A, 34B are registered in the undermentioned memory 11 together with the positions on the reagent disk.

A reagent pipette nozzle in each of reagent dispensing mechanisms 12A, 12B sucks a reagent solution from the respective reagent bottles 10A, 10B, which is positioned at a reagent receiving position on the reaction disk 1 and corresponds to the inspection item, and then discharges the reagent solution into the corresponding reaction container 2.

A mixture of the sample and reagent accommodated in the reaction container 2 is stirred by stirring mechanisms 13A, 13B. A row of the reaction containers 2 is rotationally moved through a light measurement position disposed between a light source 14 and a scattering photometer 15. The scattering photometer 15 may be provided with a multiple-wavelength absorptiometer on an optical axis, and may perform concentration calculation by use of both scattered light and transmitted light. Incidentally, the disposition of detectors in the scattering photometer 15 will be described later with reference to Fig. 2.

A reaction solution of a sample and a reagent in each reaction container 2 is subjected to light measurement every time the each reaction container 2 passes through a position before the detector 15 during the rotational operation of the reaction disk 1. An analog signal measured on a sample basis is input into an A/D converter 16. A reaction-container cleaning mechanism 17 disposed in proximity to the reaction disk 1 cleans the inside of the used reaction container 2 to enable the repeated use of the reaction container.

Next, a control system and a signal processing system in the automatic analyzer shown in Fig. 1 will be briefly described. A computer (arithmetic processing unit) 18 is connected through an interface 19 to a sample pipetting control unit 20, a reagent pipetting control unit 21 and the A/D converter 16. The computer 18 transmits an instruction to the sample pipetting control unit 20, thereby controlling the operation of pipetting a sample. In addition, the computer 18 transmits an instruction to the reagent pipetting control unit 21, thereby controlling the operation of pipetting a reagent.

A light measurement value is supplied from the detector 15, and is converted into a digital signal by the A/D converter 16. Then, the converted light measurement value is input into the computer 18.

The interface 19 is connected to a printer 22 for printing the results of analysis and the like, a memory 11 which is a storage unit, an external output medium 23 such as a FD, a keyboard 24 for inputting an operational instruction and the like, and a CRT display 25 for displaying data on a screen. Besides the CRT display, a liquid crystal display, for example, can be employed as a screen display device. The memory 11 is formed of, for example, a hard disk memory or an external memory. The memory 11 stores information including a password of each operator, a display level of each screen, analysis parameters, analysis-item request contents, the calibration results, and the analysis results.

Next, the analysis operation of analyzing a sample by the automatic analyzer shown in Fig. 1 will be described.

Analysis parameters related to items which can be analyzed by the automatic analyzer are input through an information input device such as the keyboard 24 beforehand, and are stored in the memory 11. An operator uses the undermentioned operation function screen to select an inspection item which is requested for each sample.

In this case, information such as a patient ID is also input from the keyboard 24. To analyze each sample with respect to the instructed inspection item, the pipette nozzle 8 pipettes a predetermined amount of sample from the sample container 6 to the reaction container 2 according to the analysis parameters.

The reaction container 2 which has received the sample is transferred by the rotation of the reaction disk 1, and stops at a position where the reagent is received. The pipette nozzles 8 of the reagent dispensing mechanisms 12A, 12B each pipette a predetermined amount of reagent solution into the reaction container 2 according to analysis parameters of a corresponding inspection item. The order of pipetting the sample and the reagent may be the reverse of this example; in other words, the reagent may be pipetted before the sample.

Subsequently, the stirring mechanisms 13A, 13B stir the sample and the reagent to mix them. When the reaction container 2 passes through the light measurement position, the scattering photometer 15 photometrically measures scattered light of a reaction solution. The A/D converter 16 converts the measured scattered light into a numerical value that is proportional to the light quantity. Then, the computer 18 receives the numerical value through the interface 19. This converted numerical value is converted into concentration data on the basis of a calibration curve which has been measured beforehand by an analysis method specified on an inspection item basis. Ingredient concentration data obtained as the result of analysis with respect to each inspection item is output to the printer 22 and a screen of the CRT 25.

Before the above-mentioned measurement operation is executed, the operator sets various kinds of parameters required for analysis and measurement, and registers samples, through the operation screen of the CRT 25. In addition, the operator checks the analysis results after the measurement on the operation screen of the CRT 25.

Next, how the light source 14 and the scattering photometer 15 shown in Fig. 1 are configured will be described in detail with reference to Fig. 2.

Fig. 2 is a diagram illustrating the light source 14 (201), the reaction container 2 (202) and the scattering photometer 15 (204, 205, 206).

In Fig. 2, light emitted from the light source 201 enters the reaction container 202 into which an object to be measured 203 has been pipetted. The light incident into the reaction container 202 collides with the object to be measured 203, and is then scattered. With respect to the scattered light, the detector (detection element) 204 is disposed at a position at which an angle of θ1 is formed with transmitted light, and the detector (detection element) 205 is disposed at a position at which an angle of θ2 is formed with the transmitted light in the example shown in Fig. 2. In addition, the detector (detection element) 206 is disposed at a position at which an angle of θ3 is formed with the transmitted light.

The detectors 204 to 206 are arranged in series along the Z-axis direction (the up and down direction of Fig. 2) with respect to the incident light from the light source 201. However, the detectors 204 to 206 may be arranged in the X-axis direction (the right and left direction of Fig. 2), or in the Y-axial direction (the direction from the front side towards the back side of the page space of Fig. 2).

In addition, the detectors 204 to 206 may be configured as one detector constituted of a plurality of optical detection elements disposed in a straight line.

Moreover, it is not necessary to dispose the detectors 204 to 206 discretely. The detectors 204 to 206 may be configured as one detector 301 (shown in Fig. 3) that is capable of decomposing two-dimensional positional information. Here, the detector 301 can be configured to have a plurality of detection elements, and to be two-dimensionally arranged at a different angle with respect to the light source. In this case, the plurality of detection elements may be two-dimensionally arranged in two straight lines that are orthogonal to each other.

If air bubbles or scars 207 exist in the middle of the path from the reaction container 202 to the detectors 204 to 206, light to be received by the detectors 204 to 206 will be affected.

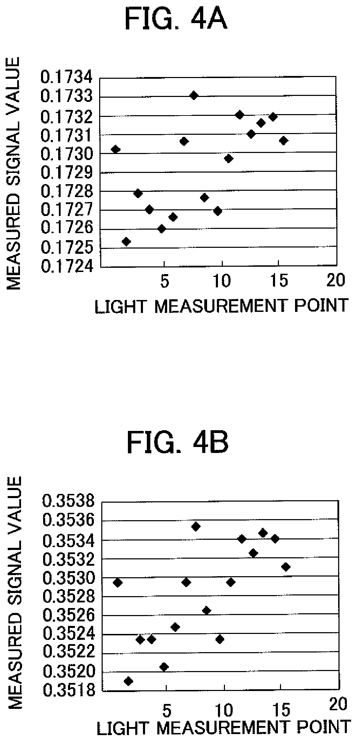

Next, Figs. 4A and 4B are graphs illustrating one example of changes in determination signals received by the detectors 204 to 206 in a reaction process in which a sample reacts with a reagent. In Figs. 4A and 4B, the vertical axis indicates a measured signal value which increases in proportion to the light quantity, and the horizontal axis indicates a measurement point (the number of measurements). The reaction containers 202 are arranged along the circumference of the reaction disk 1. In the reaction process, each of the reaction containers 202 passes through positions before the detectors 204 to 206 at regular time intervals, and the progress of the reaction from the start of the measurement to the end thereof is plotted a plurality of times with time.

Fig. 4A illustrates the process of the change in signal of the detector 204; and Fig. 4B illustrates the process of the change in signal of the detector 205. The scattered light quantity varies depending on the angle from transmitted light, and therefore the light quantity also varies depending on the detector which receives light. However, in the example shown in Fig. 2, the light quantity which is a measured signal value of the detector 204 disposed at an angle θ1 is smaller than the light quantity which is a measured signal value of the detector 205 disposed at an angle θ2.

In addition, with respect to the reaction measured from the start of the measurement to the end thereof, noise components, each of which cannot be approximated by a simple straight line or a simple curve, overlap one another. As described above, as the result of repeated verifications by inventors in the past, it is revealed that these noise components accidentally occur due to foreign matters and air bubbles which exist in a measurement optical path, and that the Brownian movement specific to particles or the convection of a solution influences the noise components.

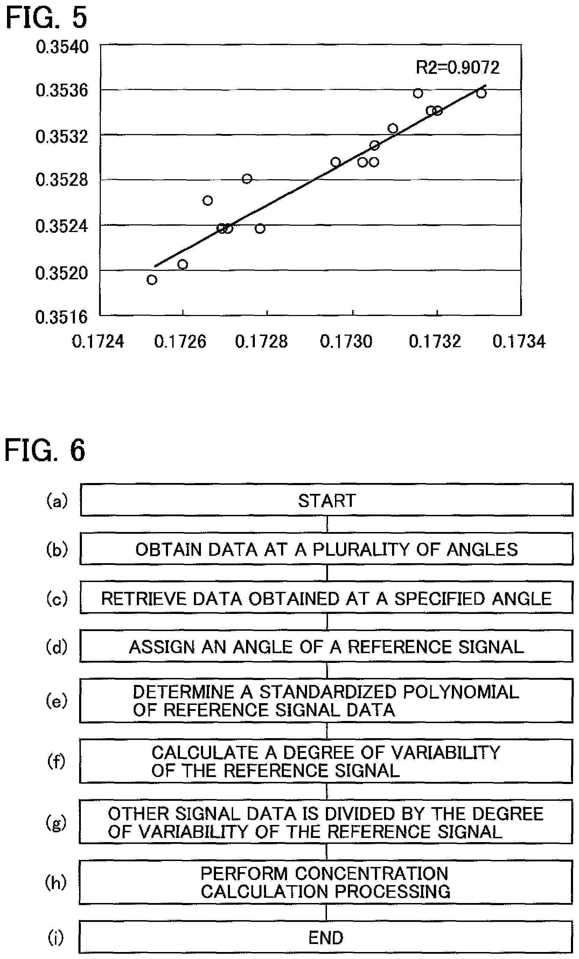

Fig. 5 is a graph illustrating the correlation between a light reception signal of the detector 204 and a light reception signal of the detector 205. In the example shown in Fig. 5, as a regression curve of the signal of the detector 204 and that of the detector 205, a first-order regression curve (straight line) is calculated by the least-squares method.

In view of the regression curve (straight line) shown in Fig. 5, there is a very close correlation between both of the signals. Thus, it has been revealed that performing calculation processing by use of both signals enables effective noise reduction.

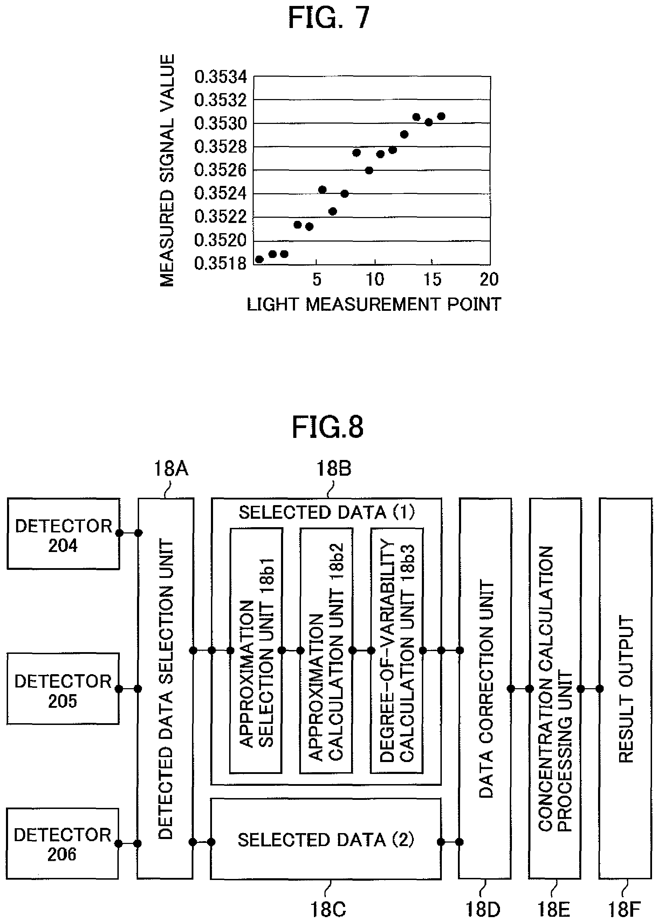

Next, algorithm for eliminating noises by use of signal components received by the plurality of detectors will be described with reference to Figs. 6 to 8. Fig. 6 is an operation flowchart; Fig. 7 is a graph illustrating data which is corrected by using the algorithm; and Fig. 8 is an internal functional block diagram of the computer 18 for executing the algorithm.

First of all, data is obtained at a plurality of angles by the plurality of detectors 204 to 206 (step (b) of Fig. 6). In addition, a measurement signal obtained by one of the detectors is selected as a reference signal by a detected data selection unit 18a (steps (c) and (d) of Fig. 6) .

Next, an approximation selection unit 18b1 of a first selected data processing unit 18b selects an approximation to be applied, and an approximation calculation unit 18b2 calculates an approximation using the selected approximation (step (e) of Fig. 6). A virtual baseline with respect to the reference signal is derived from this approximation. This virtual baseline is executed by polynomial approximation. Incidentally, according to one embodiment of the present invention, an example in which the measurement signal of the detector 204 (angle θ1) is employed as a reference signal is shown. In addition, according to one embodiment of the present invention, measurements are performed 16 times with the elapse of time of reaction.

In (a) of Fig. 4, the approximation is calculated by determining the average value of the first measurement point and the second measurement point, and by determining the average value of the 15th measurement point and the 16th measurement point. In addition, a straight line connecting between both values by a primary expression is employed as a standardized polynomial, in other words, a virtual baseline. This virtual baseline is defined as an ideal reaction curve (straight line) free from accidental noises and particle fluctuations. Next, a degree-of-variability calculation unit 18b3 determines a degree of variability of the reference signal (step (f) of Fig. 6).

More specifically, a measured signal value of each measurement point is divided by a baseline value (reference data). The degree of variability of the reference signal is used to correct a main signal to be used for concentration calculation. According to one embodiment of the present invention, an example in which the measurement signal of the detector 205 (angle θ2) is corrected is shown. More specifically, the correction is conducted by holding the measurement signal of the detector 205 (angle θ2) by a second selected data processing unit 18c, and by dividing the measurement signal by the degree of variability of the reference signal by a data correction unit 18d (step (g) of Fig. 6).

As described above, Fig. 7 illustrates data which is corrected by using the algorithm. Lastly, a concentration calculation processing unit 18e performs the concentration calculation by use of this corrected signal data (step (h) of Fig. 6); and
a result output unit 18f outputs the results to the CRT 25 or the like, and then the process ends (step (i) of Fig. 6).

A display screen (selection means) of the CRT 25 is used to select an approximation, to set the approximation order of a polynomial and a setting point used for analysis, to set a detector (sub-detector) for setting a baseline, and to set a detector (main detector) for correcting data.

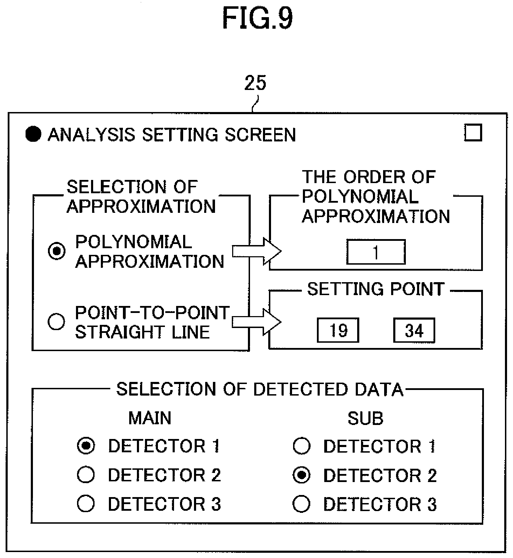

Fig. 9 is a diagram illustrating an example of an analysis setting screen on the CRT 25. In the example shown in Fig. 9, the operator can select either "polynomial approximation" or "point-to-point straight-line approximation" as an approximation selection item. In addition, when the "polynomial approximation" is selected, the approximation order can be selected, whereas when the "point-to-point straight-line approximation" is selected, setting points which define a section to be calculated can be set. Setting points which define a section to be calculated can also be set when the "polynomial approximation" is selected.

Incidentally, the mathematical expression from which the standardized polynomial (that is to say, the virtual baseline) is derived may be determined by the least-squares method other than the abovementioned example.

In addition, according to one embodiment of the present invention, the standardized polynomial is derived by use of the first point, the second point, the 15th point and the 16th point. However, this selection can be arbitrarily determined. What should be noted here is that when polynomial approximation is performed, at least five measurement points are desirably provided in consideration of the accuracy of the approximation.

For parameter settings, it is so configured that the parameters are set from the setting screen of the automatic analyzer. Incidentally, it is not always necessary to set analysis conditions from the setting screen of the automatic analyzer. If the analysis conditions are fixed, values stored in a storage area of the automatic analyzer beforehand may be used.

Moreover, in the abovementioned example, the measurement signal of the detector 204 selected from among three detectors 204 to 206 is used to calculate the baseline, and the measurement signal of the detector 205 is then corrected by use of the calculated baseline. However, a detector, the measurement signal of which is used to calculate the baseline, and another detector, the measurement signal of which is corrected by use of the calculated baseline, are selected from among the detectors 204 to 206 as appropriate according to the angle suitable for each measurement item (a detection element which is used to calculate an approximation, and another detection element which is used to correct a degree of variability are selected from among the plurality of detection elements).

As described above, according to one embodiment of the present invention, scattered light from the sample is detected by at least two scatter angles that differ from each other, the baseline is calculated by use of any one of scattered-light measurement signal values, another scattered-light measurement signal value corresponding to a scattering angle which differs from the scattering angle used for the calculation of the baseline is corrected by use of the calculated baseline, and concentration calculation of the sample is carried out by use of the corrected scattered light. Therefore, the present invention can provide an automatic analyzer which uses scattered light, wherein the influence of scattered light having noise components other than an object to be measured can be reduced, and the S/N ratio properties of a light reception signal can be improved, and can provide a method for the automatic analyzer.

### Description of Reference Numerals

1 Reaction disk
2 Reaction container
3 Thermostatic bath
4 Constant-temperature keeping device
5 Sample disk
6 Sample container
7 Movable arm
8 Pipette nozzle
9A, 9B Reagent cooling storage
11 Memory
12A, 12B Reagent pipette nozzle
15 Photodiode
18 Computer
18a Detected data selection unit
18b First selected data processing unit
18b1 Approximation selection unit
18b2 Approximation calculation unit
18b3 Degree-of-variability calculation unit
18c Second selected data processing unit
18d Data correction unit
18e Concentration calculation processing unit
18f Result output unit
19 Interface
25 CRT (selection means)
201 Light source
202 Reaction container
203 Object to be measured
204 to 206, 301 Detector
207 Air bubbles or scars

## Claims

1. An automatic analyzer comprising:
a light source (201) configured to irradiate a reaction container (202) in which a sample is accommodated with light,
an optical detection means (204, 205, 206, 301) configured to detect the light which has passed through the reaction container (202), and
an arithmetic processing unit (18) configured to analyze the sample in the reaction container (202) on the basis of the detected light, wherein:
the detection means (204, 205, 206, 301) has a plurality of optical detection elements (204, 205, 206) that are arranged at respective different angles with respect to the light source (201); and
**characterized in that** the arithmetic processing unit (18) is configured to:
calculate reference data on the basis of a plurality of measurement signals measured by one detection element (204, 205, 206) selected from among the plurality of detection elements (204, 205, 206), wherein the reference data are calculated by approximating measurement signals obtained from the selected one detection element (204, 205, 206); then
calculate degrees of variability of the plurality of measurement signals of the selected one detection element (204, 205, 206) with respect to the calculated reference data respectively, and
correct a plurality of measurement signals of a detection element (204, 205, 206) which differs from the selected one detection element (204, 205, 206), on the basis of the calculated degrees of variability,
wherein the plurality of measurement signals of each respective detection element (204, 205, 206) of the plurality of detection elements (204, 205, 206) differ in detection time from one another; and
whereby the sample is analyzed on the basis of the corrected measurement signal.

2. The automatic analyzer according to claim 1, wherein:
the plurality of detection elements (204, 205, 206) of the detection means (204, 205, 206, 301) are two-dimensionally arranged.

3. The automatic analyzer according to claim 1, wherein:
the calculated reference data is an approximation that is calculated from the plurality of measurement signals of the selected one detection element (204, 205, 206); and
the arithmetic processing unit (18) is configured to calculate each degree of variability by dividing a respective measurement signal of the plurality of measurement signals of the selected one detection element (204, 205, 206) by a respective signal value obtained by the approximation, and correct a plurality of measurement signals by dividing the plurality of measurement signals of a detection element (204, 205, 206) which differs from the selected one detection element (204, 205, 206) by the calculated degrees of variability.

4. The automatic analyzer according to claim 3, wherein:
the approximation is a straight line equation indicating a straight line that is determined by two different measurement signals selected from among the measurement signals of the selected one detection element (204, 205, 206).

5. The automatic analyzer according to claim 3, wherein:
the approximation is a straight line equation that is calculated by the least-squares method.

6. The automatic analyzer according to claim 3, further comprising:
selection means (25) for selecting either a polynomial approximation or a point-to-point straight line as the approximation.

7. The automatic analyzer according to claim 3, further comprising:
selection means (25) for selecting a section in which the approximation is calculated.

8. The automatic analyzer according to claim 3, further comprising:
selection means (25) for selecting, from among the plurality of detection elements (204, 205, 206), a detection element (204, 205, 206) used to calculate the approximation and a detection element (204, 205, 206) used to correct the degree of variability.

9. The automatic analyzer according to claim 6, wherein:
the selection means (25) is a display screen for displaying selection items.

10. An automatic analysis method which irradiates a reaction container (202) in which a sample is accommodated with light from a light source (201), detects the light which has passed through the reaction container (202), and analyzes the sample in the reaction container (202) on the basis of the detected light, the method comprising the steps of:
detecting the light which has passed through the reaction container (202) by a plurality of optical detection elements (204, 205, 206) which are disposed at respective different angles with respect to the light source (201);
**characterized by**
calculating reference data on the basis of a plurality of measurement signals measured by one detection element (204, 205, 206) selected from among the plurality of detection elements (204, 205, 206), wherein the reference data are calculated by approximating measurement signals obtained from the selected one detection element (204, 205, 206);
calculating degrees of variability of the plurality of measurement signals of the selected one detection element (204, 205, 206) with respect to the calculated reference data respectively;
correcting a plurality of measurement signals of a detection element (204, 205, 206) which differs from the selected one detection element (204, 205, 206) on the basis of the calculated degrees of variability; and
analyzing the sample on the basis of the corrected measurement signal;
wherein the plurality of measurement signals of each respective detection element (204, 205, 206) of the plurality of detection elements (204, 205, 206) differ in detection time from one another.

11. The automatic analysis method according to claim 10, wherein:
the plurality of detection elements (204, 205, 206) are two-dimensionally arranged.

12. The automatic analysis method according to claim 10, wherein:
the calculated reference data is an approximation that is calculated from the plurality of measurement signals of the selected one detection element (204, 205, 206);
a respective measurement signal of the plurality of measurement signals of the selected one detection element (204, 205, 206) is divided by a respective signal value obtained by the approximation to calculate each degree of variability; and
a plurality of measurement signals of a detection element (204, 205, 206) which differs from the selected one detection element (204, 205, 206) are divided by the calculated degrees of variability to correct the plurality of measurement signals.

13. The automatic analysis method according to claim 12, wherein:
the approximation is a straight line equation indicating a straight line that is determined by two different measurement signals selected from among the measurement signals of the selected one detection element (204, 205, 206).

14. The automatic analysis method according to claim 12, wherein:
the approximation is a straight line equation that is calculated by the least-squares method.

15. The automatic analysis method according to claim 12, wherein:
either a polynomial approximation or a point-to-point straight line is selected as the approximation.

16. The automatic analysis method according to claim 12, wherein:
a section in which the approximation is calculated is selected.

17. The automatic analysis method according to claim 12, wherein:
a detection element (204, 205, 206) used to calculate the approximation and another detection element (204, 205, 206) used to correct the degree of variability are selected from among the plurality of detection elements (204, 205, 206).

18. The automatic analysis method according to claim 15, wherein:
either a polynomial approximation or a point-to-point straight line is selected as the approximation by using a display screen that displays selection items.

## Patentansprüche

1. Automatische Analysevorrichtung, die Folgendes umfasst:
eine Lichtquelle (201), die konfiguriert ist, einen Reaktionsbehälter (202), in dem eine Probe aufgenommen ist, mit Licht zu bestrahlen,
ein optisches Detektionsmittel (204, 205, 206, 301), das konfiguriert ist, das Licht zu detektieren, das durch den Reaktionsbehälter (202) gelenkt wurde, und
eine arithmetische Verarbeitungseinheit (18), die konfiguriert ist, die Probe in dem Reaktionsbehälter (202) basierend auf dem detektierten Licht zu analysieren, wobei:
das Detektionsmittel (204, 205, 206, 301) eine Vielzahl von optischen Detektionselementen (204, 205, 206) aufweist, die in entsprechend unterschiedlichen Winkeln in Bezug auf die Lichtquelle (201) angeordnet sind; und
**dadurch gekennzeichnet, dass**:
die arithmetische Verarbeitungseinheit (18) konfiguriert ist:
Referenzdaten basierend auf einer Vielzahl von Messsignalen, die durch ein Detektionselement (204, 205, 206) gemessen wurden, das aus der Vielzahl von Detektionselementen (204, 205, 206) ausgewählt ist, zu berechnen, wobei die Referenzdaten durch Annähern der von dem einen ausgewählten Detektionselement (204, 205, 206) erhaltenen Messsignale berechnet werden; dann
Variabilitätsgrade der Vielzahl von Messsignalen des einen ausgewählten Detektionselements (204, 205, 206) jeweils in Bezug auf die berechneten Referenzdaten zu berechnen und
eine Vielzahl von Messsignalen eines Detektionselements (204, 205, 206), das sich von dem einen ausgewählten Detektionselement (204, 205, 206) unterscheidet, basierend auf den berechneten Variabilitätsgraden zu korrigieren,
wobei sich die Vielzahl von Messsignalen jedes entsprechenden Detektionselements (204, 205, 206) aus der Vielzahl von Detektionselementen (204, 205, 206) jeweils in Hinblick auf die Detektionszeit voneinander unterscheiden; und
wobei die Probe basierend auf dem korrigierten Messsignal analysiert wird.

2. Automatische Analysevorrichtung nach Anspruch 1, wobei:
die Vielzahl von Detektionselementen (204, 205, 206) des Detektionsmittels (204, 205, 206, 301) zweidimensional angeordnet ist.

3. Automatische Analysevorrichtung nach Anspruch 1, wobei:
die berechneten Referenzdaten eine Annäherung darstellen, die ausgehend von der Vielzahl an Messsignalen des einen ausgewählten Detektionselements (204, 205, 206) berechnet wird; und
die arithmetische Verarbeitungseinheit (18) konfiguriert ist, jeden Variabilitätsgrad durch Dividieren eines entsprechenden Messsignals aus der Vielzahl von Messsignalen des einen ausgewählten Detektionselements (204, 205, 206) durch einen entsprechenden Signalwert zu berechnen, der durch die Annäherung erhalten wurde, und eine Vielzahl von Messsignalen durch Dividieren der Vielzahl von Messsignalen eines Detektionselements (204, 205, 206), das sich von dem einen ausgewählten Detektionselement (204, 205, 206) unterscheidet, durch die berechneten Variabilitätsgrade zu korrigieren.

4. Automatische Analysevorrichtung nach Anspruch 3, wobei:
die Annäherung eine Geradengleichung ist, die eine Gerade angibt, die von zwei unterschiedlichen Messsignalen bestimmt wird, die aus den Messsignalen des einen ausgewählten Detektionselements (204, 205, 206) ausgewählt sind.

5. Automatische Analysevorrichtung nach Anspruch 3, wobei:
die Annäherung eine Geradengleichung ist, die über die Methode der kleinsten Quadrate berechnet wird.

6. Automatische Analysevorrichtung nach Anspruch 3, die ferner Folgendes umfasst:
ein Auswahlmittel (25) zum Auswählen entweder einer Polynom-Annäherung oder einer Punkt-zu-Punkt-Geraden als Annäherung.

7. Automatische Analysevorrichtung nach Anspruch 3, die ferner Folgendes umfasst:
ein Auswahlmittel (25) zum Auswählen eines Abschnitts, in dem die Annäherung berechnet wird.

8. Automatische Analysevorrichtung nach Anspruch 3, die ferner Folgendes umfasst:
ein Auswahlmittel (25) zum Auswählen eines Detektionselements (204, 205, 206), das verwendet wird, um die Annäherung zu berechnen, und eines Detektionselements (204, 205, 206) das verwendet wird, um den Variabilitätsgrad zu korrigieren, aus der Vielzahl von Detektionselementen (204, 205, 206).

9. Automatische Analysevorrichtung nach Anspruch 6, wobei:
das Auswahlmittel (25) ein Anzeigebildschirm zum Anzeigen von Auswahlmöglichkeiten ist.

10. Automatisches Analyseverfahren, in dem ein Reaktionsbehälter (202), in dem eine Probe beinhaltet ist, mit Licht aus einer Lichtquelle (201) bestrahlt wird, das Licht, das durch den Reaktionsbehälter (202) gelenkt wurde, detektiert wird und die Probe in dem Reaktionsbehälter (202) basierend auf dem detektierten Licht analysiert wird, wobei das Verfahren die folgenden Schritte umfasst:
Detektieren des Lichts, das durch den Reaktionsbehälter (202) gelenkt wurde, durch eine Vielzahl von optischen Detektionselementen (204, 205, 206), die an entsprechend verschiedenen Winkeln in Bezug auf die Lichtquelle (201) angeordnet sind;
**dadurch gekennzeichnet, dass**:
Referenzdaten basierend auf einer Vielzahl von durch ein Detektionselement (204, 205, 206), ausgewählt aus der Vielzahl von Detektionselementen (204, 205, 206), gemessenen Messsignalen berechnet werden, wobei die Referenzdaten durch Annähern von Messsignalen berechnet werden, die von dem einen ausgewählten Detektionselement (204, 205, 206) erhalten werden;
Variabilitätsgrade der Vielzahl von Messsignalen des einen ausgewählten Detektionselements (204, 205, 206) in Bezug auf die jeweiligen berechneten Referenzdaten berechnet werden;
eine Vielzahl von Messsignalen eines Detektionselements (204, 205, 206), das sich von dem einen ausgewählten Detektionselement (204, 205, 206) unterscheidet, basierend auf den berechneten Variabilitätsgraden korrigiert wird; und
eine Probe basierend auf dem korrigierten Messsignal analysiert wird;
wobei sich die Vielzahl von Messsignalen jedes entsprechenden Detektionselements (204, 205, 206) aus der Vielzahl von Detektionselementen (204, 205, 206) in Hinblick auf die Detektionszeit voneinander unterscheidet.

11. Automatisches Analyseverfahren nach Anspruch 10, wobei:
die Vielzahl von Detektionselementen (204, 205, 206) zweidimensional angeordnet ist.

12. Automatisches Analyseverfahren nach Anspruch 10, wobei:
die berechneten Referenzdaten eine Annäherung sind, die ausgehend von der Vielzahl von Messsignalen des einen ausgewählten Detektionselements (204, 205, 206) berechnet wird;
ein entsprechendes Messsignal aus der Vielzahl von Messsignalen des einen ausgewählten Detektionselements (204, 205, 206) durch einen entsprechenden Signalwert dividiert wird, der durch die Annäherung zur Berechnung jedes Variabilitätsgrads erhalten wurde; und
eine Vielzahl von Messsignalen eines Detektionselements (204, 205, 206), das sich von dem einen ausgewählten Detektionselement (204, 205, 206) unterscheidet, durch die berechneten Variabilitätsgrade dividiert wird, um die Vielzahl von Messsignalen zu korrigieren.

13. Automatisches Analyseverfahren nach Anspruch 12, wobei:
die Annäherung eine Geradengleichung ist, die eine Gerade angibt, die von zwei verschiedenen Messsignalen bestimmt wird, die aus den Messsignalen des einen ausgewählten Detektionselements (204, 205, 206) ausgewählt sind.

14. Automatisches Analyseverfahren nach Anspruch 12, wobei:
die Annäherung eine Geradengleichung ist, die über die Methode der kleinsten Quadrate berechnet wird.

15. Automatisches Analyseverfahren nach Anspruch 12, wobei:
entweder eine Polynom-Annäherung oder eine Punkt-zu-Punkt-Gerade als Annäherung ausgewählt wird.

16. Automatisches Analyseverfahren nach Anspruch 12, wobei:
ein Abschnitt ausgewählt wird, in dem die Annäherung berechnet wird.

17. Automatisches Analyseverfahren nach Anspruch 12, wobei:
ein Detektionselement (204, 205, 206), das verwendet wird, um die Annäherung zu berechnen, und ein weiteres Detektionselement (204, 205, 206), das verwendet wird, um den Variabilitätsgrad zu berechnen, aus der Vielzahl von Detektionselementen (204, 205, 206) ausgewählt werden.

18. Automatisches Analyseverfahren nach Anspruch 15, wobei:
entweder eine Polynom-Annäherung oder eine Punkt-zu-Punkt-Gerade unter Verwendung eines Anzeigebildschirms, der Auswahlmöglichkeiten anzeigt, als Annäherung ausgewählt wird.

## Revendications

1. Analyseur automatique comprenant :
une source de lumière (201) configurée pour irradier un récipient de réaction (202) dans lequel un échantillon est logé avec de la lumière,
des moyens de détection optiques (204, 205, 206, 301) configurés pour détecter la lumière qui est passée à travers le récipient de réaction (202), et
une unité de traitement arithmétique (18) configurée pour analyser l'échantillon dans le récipient de réaction (202) sur la base de la lumière détectée, dans lequel :
les moyens de détection (204, 205, 206, 301) comportent une pluralité d'éléments de détection optiques (204, 205, 206) qui sont agencés selon différents angles respectifs par rapport à la source de lumière (201) ; et
**caractérisé en ce que** l'unité de traitement arithmétique (18) est configurée pour :
calculer des données de référence sur la base d'une pluralité de signaux de mesure mesurés par un élément de détection (204, 205, 206) sélectionné parmi la pluralité d'éléments de détection (204, 205, 206), dans lequel les données de référence sont calculées par approximation des signaux de mesure obtenus à partir de l'élément de détection (204, 205, 206) sélectionné ; ensuite
calculer les degrés de variabilité de la pluralité de signaux de mesure de l'élément de détection (204, 205, 206) sélectionné par rapport aux données de référence calculées respectivement, et
corriger une pluralité de signaux de mesure d'un élément de détection (204, 205, 206) qui diffère de l'élément de détection (204, 205, 206) sélectionné, sur la base des degrés de variabilité calculés,
dans lequel la pluralité de signaux de mesure de chaque élément de détection (204, 205, 206) respectif de la pluralité d'éléments de détection (204, 205, 206) diffèrent quant au temps de détection les uns des autres ; et
moyennant quoi l'échantillon est analysé sur la base du signal de mesure corrigé.

2. Analyseur automatique selon la revendication 1, dans lequel :
la pluralité d'éléments de détection (204, 205, 206) des moyens de détection (204, 205, 206, 301) sont agencés de manière bidimensionnelle.

3. Analyseur automatique selon la revendication 1, dans lequel :
les données de référence calculées sont une approximation qui est calculée à partir de la pluralité de signaux de mesure de l'élément de détection (204, 205, 206) sélectionné ; et
l'unité de traitement arithmétique (18) est configurée pour calculer chaque degré de variabilité en divisant un signal de mesure respectif de la pluralité de signaux de mesure de l'élément de détection (204, 205, 206) sélectionné par une valeur de signal respective obtenue par l'approximation, et corriger une pluralité de signaux de mesure en divisant la pluralité de signaux de mesure d'un élément de détection (204, 205, 206) qui diffère de l'élément de détection (204, 205, 206) sélectionné par les degrés de variabilité calculés.

4. Analyseur automatique selon la revendication 3, dans lequel :
l'approximation est une équation de droite indiquant une droite qui est déterminée par deux signaux de mesure différents sélectionnés parmi les signaux de mesure de l'élément de détection (204, 205, 206) sélectionné.

5. Analyseur automatique selon la revendication 3, dans lequel :
l'approximation est une équation de droite qui est calculée par le procédé des moindres carrés.

6. Analyseur automatique selon la revendication 3, comprenant en outre :
des moyens de sélection (25) pour sélectionner l'une ou l'autre d'une approximation polynomiale ou d'une droite de point-à-point en tant qu'approximation.

7. Analyseur automatique selon la revendication 3, comprenant en outre :
des moyens de sélection (25) pour sélectionner une section dans laquelle l'approximation est calculée.

8. Analyseur automatique selon la revendication 3, comprenant en outre :
des moyens de sélection (25) pour sélectionner, parmi la pluralité d'éléments de détection (204, 205, 206), un élément de détection (204, 205, 206) utilisé pour calculer l'approximation et un élément de détection (204, 205, 206) utilisé pour corriger le degré de variabilité.

9. Analyseur automatique selon la revendication 6, dans lequel :
les moyens de sélection (25) sont un écran d'affichage pour afficher des articles de sélection.

10. Procédé d'analyse automatique qui irradie un récipient de réaction (202) dans lequel un échantillon est logé avec une lumière provenant d'une source de lumière (201), qui détecte la lumière qui est passée à travers le récipient de réaction (202), et qui analyse l'échantillon dans le récipient de réaction (202) sur la base de la lumière détectée, le procédé comprenant les étapes :
de détection de la lumière qui est passée à travers le récipient de réaction (202) par une pluralité d'éléments de détection optiques (204, 205, 206) qui sont disposés selon différents angles respectifs par rapport à la source de lumière (201) ;
**caractérisé par**
le calcul de données de référence sur la base d'une pluralité de signaux de mesure mesurés par un élément de détection (204, 205, 206) sélectionné parmi la pluralité d'éléments de détection (204, 205, 206), dans lequel les données de référence sont calculées par approximation des signaux de mesure obtenus à partir de l'élément de détection (204, 205, 206) sélectionné ;
le calcul des degrés de variabilité de la pluralité de signaux de mesure de l'élément de détection (204, 205, 206) sélectionné par rapport aux données de référence calculées respectivement ;
la correction d'une pluralité de signaux de mesure d'un élément de détection (204, 205, 206) qui diffère de l'élément de détection (204, 205, 206) sélectionné sur la base des degrés de variabilité calculés ; et
l'analyse de l'échantillon sur la base du signal de mesure corrigé ;
dans lequel la pluralité de signaux de mesure de chaque élément de détection (204, 205, 206) respectif de la pluralité d'éléments de détection (204, 205, 206) diffèrent quant au temps de détection les uns des autres.

11. Procédé d'analyse automatique selon la revendication 10, dans lequel :
la pluralité d'éléments de détection (204, 205, 206) sont agencés de manière bidimensionnelle.

12. Procédé d'analyse automatique selon la revendication 10, dans lequel :
les données de référence calculées sont une approximation qui est calculée à partir de la pluralité de signaux de mesure de l'élément de détection (204, 205, 206) sélectionné ;
un signal de mesure respectif de la pluralité de signaux de mesure de l'élément de détection (204, 205, 206) sélectionné est divisé par une valeur de signal respective obtenue par l'approximation pour calculer chaque degré de variabilité ; et
une pluralité de signaux de mesure d'un élément de détection (204, 205, 206) qui diffère de l'élément de détection (204, 205, 206) sélectionné sont divisés par les degrés de variabilité calculés pour corriger la pluralité de signaux de mesure.

13. Procédé d'analyse automatique selon la revendication 12, dans lequel :
l'approximation est une équation de droite indiquant une droite qui est déterminée par deux signaux de mesure différents sélectionnés parmi les signaux de mesure de l'élément de détection (204, 205, 206) sélectionné.

14. Procédé d'analyse automatique selon la revendication 12, dans lequel :
l'approximation est une équation de droite qui est calculée par le procédé des moindres carrés.

15. Procédé d'analyse automatique selon la revendication 12, dans lequel :
l'une ou l'autre d'une approximation polynomiale ou d'une droite de point-à-point est sélectionnée en tant qu'approximation.

16. Procédé d'analyse automatique selon la revendication 12, dans lequel :
une section dans laquelle l'approximation est calculée est sélectionnée.

17. Procédé d'analyse automatique selon la revendication 12, dans lequel :
un élément de détection (204, 205, 206) utilisé pour calculer l'approximation et un autre élément de détection (204, 205, 206) utilisé pour corriger le degré de variabilité sont sélectionnés parmi la pluralité d'éléments de détection (204, 205, 206).

18. Procédé d'analyse automatique selon la revendication 15, dans lequel :
l'une ou l'autre d'une approximation polynomiale ou d'une droite de point-à-point est sélectionnée en tant qu'approximation en utilisant un écran d'affichage qui affiche des articles de sélection.
